(19) Europäisches Patentamt
European Patent Office
Office européen des brevets

(11) EP 0 910 606 B1

(12) EUROPEAN PATENT SPECIFICATION

(45) Date of publication and mention of the grant of the patent:
**06.06.2001 Bulletin 2001/23**

(21) Application number: **97934148.4**

(22) Date of filing: **10.07.1997**

(51) Int Cl.[7]: **C08L 23/02**, C08F 8/00, C08C 19/30

(86) International application number:
**PCT/US97/12249**

(87) International publication number:
**WO 98/02489 (22.01.1998 Gazette 1998/03)**

(54) **ELASTOMERS, PROCESSES FOR THEIR MANUFACTURE, AND ARTICLES MADE FROM THESE ELASTOMERS**

ELASTOMERE, VERFAHREN ZUR HERSTELLUNG DAVON, UND AUS DIESEN ELASTOMEREN HERGESTELLTEN GEGENSTÄNDEN

ELASTOMERES, PROCEDES DE FABRICATION ASSOCIES, ET ARTICLES FABRIQUES A PARTIR DESDITS ELASTOMERES

(84) Designated Contracting States:
**AT BE CH DE DK ES FI FR GB GR IE IT LI LU MC NL PT SE**

(30) Priority: **12.07.1996 US 678909**
**12.07.1996 US 678941**

(43) Date of publication of application:
**28.04.1999 Bulletin 1999/17**

(73) Proprietor: **THE DOW CHEMICAL COMPANY**
**Midland, Michigan 48674 (US)**

(72) Inventors:
- **HO, Thoi, H.**
  **Lake Jackson, TX 77566 (US)**
- **JOHNSTON, Robert, T.**
  **Lake Jackson, TX 77566 (US)**
- **HUGHES, Morgan, M.**
  **Angleton, TX 77515 (US)**
- **ALLEN, Jimmy, D.**
  **Brazoria, TX 77422 (US)**

(74) Representative:
**Weickmann, Heinrich, Dipl.-Ing. et al**
**Weickmann & Weickmann**
**Patentanwälte**
**Postfach 86 08 20**
**81635 München (DE)**

(56) References cited:

| | |
|---|---|
| EP-A- 0 186 060 | EP-A- 0 385 918 |
| EP-A- 0 407 098 | WO-A-93/20144 |
| FR-A- 2 135 098 | GB-A- 1 131 010 |
| GB-A- 2 007 683 | GB-A- 2 188 053 |
| US-A- 3 354 116 | US-A- 3 409 595 |
| US-A- 4 486 571 | US-A- 4 624 885 |
| US-A- 5 037 888 | US-A- 5 412 038 |

EP 0 910 606 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to elastomers, and processes for making and products made from elastomers. In one aspect, the invention relates to crosslinking functionalized elastomers. In another aspect, this invention relates to elastomers crosslinked with a compound other than sulfur or a peroxide. In yet another aspect, this invention relates to processes for making melt processible thermoplastic vulcanized compositions capable of forming elastomeric products, processes for making elastomeric products and products made from these processes.

Traditionally, elastomers have been crosslinked (also known as vulcanized) using either (i) a free radical curing system initiated by radiation or a peroxide or (ii) sulfur, but the resulting products have often been unsatisfactory for one or more of several reasons. For example, low molecular weight byproducts (which can have detrimental effects on the physical properties of the crosslinked elastomer) are often produced with free radical curing systems, and sulfur-crosslinked elastomers can have odor and color problems as well as less than desirable heat aging stability and weatherability characteristics due to unsaturation in the polymer chain and/or weak sulfur linkages. Alternative crosslinking systems have been proposed, for example US-A-4,801,647 discloses crosslinking an ethylene-propylenediene elastomer grafted with maleic anhydride with diamine crosslinking agents, but the development of other elastomer crosslinking systems is still of interest to many end-users of elastomers.

Thermoplastic vulcanizates (TPV's) are well known, e.g. Santoprene® thermoplastic rubber which is a mixture of crosslinked EPDM particles in a crystalline polypropylene matrix manufactured by Advanced Elastomer Systems. These materials have found utility in many applications which previously used vulcanized rubber, e.g. hoses, gaskets, etc. TPV's are noted for their processability as thermoplastics while retaining the excellent tensile and compression set properties of vulcanized rubbers.

The TPV's available today are based on vulcanized rubbers in which a phenolic resin or sulfur cure system is used to vulcanize, i.e. crosslink, a diene (or more generally, a polyene) copolymer rubber by way of dynamic vulcanization, i.e. crosslinking while mixing (typically vigorously), in a thermoplastic matrix. These methods are preferred over peroxide free radical cure systems because if the thermoplastic is polypropylene, then the peroxide degrades the polypropylene and if the thermoplastic is polyethylene, then the peroxide crosslinks the polyethylene as well as the rubber and this in turn limits the extent of rubber crosslinking that can occur before the entire mixture is no longer thermoplastic.

GB-A-1 130 010 discloses a crosslinked composition comprising an acid chloride modified polymer rubber. It does not teach a process for making the melt processible thermoplasitic compositions disclosed herein.

One aspect of the present invention is a process for making an at least partially crosslinked elastomer, the process comprising reacting, by contacting:

(1) an elastomeric polymer, comprising ethylene/α-olefin interpolymer containing reactive substitutents, with
(2) a crosslinking agent

(a) containing two or more reactive substituents differing from those contained in the elastomeric polymer, and
(b) having a number average molecular weight less than 2000,

each of the reactive substituents selected such that

(i) those of the elastomeric polymer will react with those of the crosslinking agent to at least partially crosslink the functionalized elastomeric polymer and
(ii) each of the reactive substituents is selected from carboxylic acid, carboxylic anhydride, carboxylic acid salt, hydroxy, epoxy and isocyanate.

Another aspect of this invention is a process comprising the step of dynamically vulcanizing

(A) an elastomeric polymer comprising an ethylene/α-olefin interpolymer containing reactive substituents with
(B) a crosslinking agent containing two or more reactive substituents, in the presence of
(C) a thermoplastic polymer in which

(1) the elastomeric polymer contains two or more reactive substituents differing from those contained in the crosslinking agent, and
(2) the crosslinking agent has a number average molecular weight less than 2000,

each of the reactive substituents selected

(i) such that those of the elastomeric polymer will react with those of the crosslinking agent to at least partially crosslink the elastomeric polymer and
(ii) from the group consisting of carboxylic acid, carboxylic anhydride, carboxylic acid salt, carbonyl halide, hydroxy, epoxy, and isocyanate;

and the melt processible thermoplastic compositions obtainable by that process. Melt processible thermoplastic compositions according to this invention are also obtainable by a process comprising the step of blending an at least partially crosslinked elastomer with a thermoplastic polymer, in which the at least partially crosslinked elastomer is made according to the process mentioned above.

Another aspect of this invention is a melt processible thermoplastic composition, the composition comprising:

(A) 5 to 95 wt.% of at least one thermoplastic polymer, and
(B) 95 to 5 wt.% of an at least partially

vulcanized (i.e., partially crosslinked) elastomer mentioned above.

The present invention also includes articles comprising at least one of the melt processible compositions of this invention, and the shaping of these articles, preferably in a melt processing operation.

Figure 1 shows Monsanto ODR torque versus time plots for two different polymer melt compositions mixed with a Rheomix 600 mixer at 60 rpm at 110 C. The solid plot line represents a melt composition comprising ethylene 1-octene elastomeric polymer grafted with 2 wt. % maleic anhydride (MAH) and Irganox™ B900 antioxidant, and the interrupted plot line represents the same melt composition with 6.4 wt. % glycidyl ether of bisphenol A having an epoxide equivalent of 176-183 (DER 383 commercially available from The Dow Chemical Co.) as described in Example 4 of this invention.

"Polymer" means a large molecule made from a number of repeating units termed monomers. "Homopolymer" means a polymer made from one kind of monomer. "Interpolymer" means a polymer made from two or more kinds of monomers, and includes "copolymers" which are made from two kinds of monomers, "terpolymers" which are made from three kinds of monomers.

"Elastomeric polymer" means a polymer that can be stretched with the application of stress to at least twice its length and after release of the stress, returns to its approximate original dimensions and shape. The elastic recovery of an elastomeric polymer prior to vulcanization is generally at least 40%, preferably at least 60%, and more preferably at least 80% when measured according to ASTM D-412.

Suitable elastomeric polymers for use in this invention include ethylene/α-olefin interpolymers; isoprene rubbers such as polyisoprene (including natural rubber) and isobutylene/isoprene rubber (butyl rubber); polychloroprene; butadiene rubbers such as polybutadiene, styrene/butadiene rubber, and acrylonitrile/butadiene rubber and block copolymer rubbers such as styrene/isoprene /styrene triblock; styrene/butadiene/styrene triblock, and hydrogenated styrene/butadiene/styrene block, e.g. styrene/ethylene/butene/styrene block copolymer. "α-Olefin" means a hydrocarbon molecule or a substituted hydrocarbon molecule (i.e. a hydrocarbon molecule comprising one or more atoms other than hydrogen and carbon, e.g. halogen, oxygen, and nitrogen), the hydrocarbon molecule comprising (i) only one ethylenic unsaturation, this unsaturation located between the first and second carbon atoms, and (ii) at least 3 carbon atoms, preferably of 3 to 20 carbon atoms, in some cases preferably of 4 to 10 carbon atoms and in other cases preferably of 4 to 8 carbon atoms. Examples of preferred α-olefins from which the elastomers used in this invention are prepared include propylene, 1-butene, 1-pentene, 1-hexene, 1-octene, 1-dodecene, and mixtures of two or more of these monomers.

Preferred among the elastomeric polymers useful in the practice of this invention are the ethylene/α-olefin interpolymers, particularly those having a density less than about 0.9 g/cm$^3$. Preferred ethylene interpolymers include ethylene/α-olefin copolymers; ethylene/α-olefin/diene terpolymers; and interpolymers of ethylene and one or more other monomers which are copolymerizable with ethylene, such as ethylenically unsaturated carboxylic acids (both mono- and difunctional) and their corresponding esters and anhydrides, e.g. acrylic acid, methacrylic acid, vinyl ester (e.g., vinyl acetate) and maleic anhydride, and vinyl group-containing aromatic monomers such as styrene. Included among these polymers are (i) heterogeneous linear low density ethylene interpolymers (heterogeneous LLDPE) made using Ziegler-Natta catalysts in a slurry, gas phase, solution or high pressure process, such as described in US-A-4,076,698, and (ii) homogeneous linear ethylene polymers such as (a) those described in US-A-3,645,992, and (b) those made using the so-called single site catalysts in a batch reactor having relatively high olefin concentrations as described, for example, in US-A-5,026,798 and US-A-5,055,438. Such polymers are commercially available. Representative of commercially available homogeneous linear ethylene polymers are TAFMER™ made by Mitsui Petrochemical Industries, Ltd. and EXACT™ made by Exxon Chemical Co.

Especially preferred ethylene/α-olefin interpolymers are ethylene/1-octene, ethylene/1-hexene, ethylene/1-butene and ethylene/propylene copolymers produced via a constrained geometry single site catalyst. A process for

making such copolymers is described in UA-A-5,272,236 and US-A-5,278,272. Such ethylene interpolymers are preferably substantially linear olefin polymers having long chain branching. Substantially linear olefin polymers can be made by gas phase, solution phase, high pressure or slurry polymerization. These polymers are preferably made by solution polymerization. Substantially linear ethylene polymers (SLEP's) are commercially available from The Dow Chemical Co. under the trademark AFFINITY and from DuPont Dow Elastomers L.L.C. under the trademark ENGAGE.

"Substantially linear polymer" means that the polymer backbone contains long chain branching and is substituted with an average of up to 3 long chain branches/1000 carbons. Preferred substantially linear polymers are substituted with 0.01 to 3 long chain branches/1000 carbons, more preferably from 0.01 to 1 long chain branches/1000 carbons, and especially from 0.3 to 1 long chain branches/1000 carbons. These substantially linear polymers are characterized by:

a) a melt flow ratio, $I_{10}/I_2$, ≥ 5.63,

b) a molecular weight distribution, $M_w/M_n$, defined by the equation:

$$M_w/M_n \leq (I_{10}/I_2) - 4.63,$$

and

c) a critical shear stress at onset of gross melt fracture of greater than about 4 x $10^6$ dyne/$cm^2$.

"Long chain branching" means a pendant carbon chain having a chain length of at least 6 carbons, above which the length cannot be distinguished using $^{13}C$ nuclear magnetic resonance spectroscopy. The long chain branch can be as long as about the length of the polymer backbone to which it is attached.

The presence of long chain branching can be determined in ethylene homopolymers by using $^{13}C$ nuclear magnetic resonance (NMR) spectroscopy and is quantified using the method of Randall (*Rev. Macromol. Chem. Phys.,* C29 (2&3), p. 285-297). However as a practical matter, current $^{13}C$ nuclear magnetic resonance spectroscopy cannot determine the length of a long chain branch in excess of six carbon atoms. For ethylene α-olefin copolymers, the long chain branch is longer than the short chain branch that results from the incorporation of the α-olefin(s) into the polymer backbone. For example, a substantially linear ethylene/1-octene copolymer has a short chain branch length of six (6) carbons, but a long chain branch length of at least seven (7) carbons.

The SLEP's preferably comprise from 95 to 50 weight percent (wt. %) ethylene, and from 5 to 50 wt% of at least one α-olefin comonomer, more preferably from 10 to 35 wt% of at least one α-olefin comonomer. The comonomer content is measured using infrared spectroscopy according to ASTM D-2238, Method B. Typically, the SLEP's are copolymers of ethylene and an α-olefin of 3 to 20 carbon atoms (e.g., propylene, 1-butene, 1-hexene, 4-methyl-1-pentene, 1-heptene, 1-octene, styrene, etc.), preferably of 3 to 10 carbon atoms, and more preferably these polymers are a copolymer of ethylene and 1-octene. The density of these substantially linear ethylene polymers is preferably in the range from about 0.85 to about 0.9, more preferably from 0.85 to 0.88, grams per cubic centimeter ($g/cm^3$) determined by ASTM D-792. The melt flow ratio, measured as $I_{10}/I_2$ as defined in ASTM D-1238, Conditions 190C/10 kg and 190C/2.16 kg (formerly known as "Conditions (N) and (E)", respectively and also known as $I_{10}$ and $I_2$, respectively), is greater than or equal to 5.63, and is preferably in the range from about 6.5 to 15, more preferably in the range from about 7 to 10. The molecular weight distribution ($M_W/M_n$), measured by gel permeation chromatography (GPC), is preferably in the range from 1.5 to 2.5. For substantially linear ethylene polymers, the $I_{10}/I_2$ ratio indicates the degree of long-chain branching, i.e. the larger the $I_{10}/I_2$ ratio, the more long-chain branching in the polymer.

A unique characteristic of the homogeneously branched, substantially linear ethylene polymers is the highly unexpected flow property where the $I_{10}/I_2$ value of the polymer is essentially independent of the polydispersity index (i.e., $M_w/M_n$) of the polymer. This is contrasted with conventional linear homogeneously branched and linear heterogeneously branched polyethylene resins having rheological properties such that to increase the $I_{10}/I_2$ value the polydispersity index must also be increased.

Substantially linear olefin polymers have a critical shear rate at onset of surface melt fracture of at least 50 percent greater than the critical shear rate at the onset of surface melt fracture of a linear olefin polymer having about the same $I_2$, $M_w/M_n$, and density. By "about the same" is meant that each value is within 10 percent of the comparative value.

The preferred melt index, measured as $I_2$ (ASTM D-1238, condition 190/2.16 (formerly condition E)), is from 0.1 g/10 min to 200 g/10 min, more preferably 0.1 to 20 g/10 min. Typically, the preferred SLEP's used in the practice of this invention are homogeneously branched and do not have any measurable high density fraction, i.e., short chain branching distribution as measured by Temperature Rising Elution Fractionation described in US-A-5,089,321. Stated in another manner, these polymers do not contain any polymer fraction that has a degree of branching less than or equal to 2 methyl groups/1000 carbons. These preferred SLEP's also have a single differential scanning calorimetry

(DSC) melting peak between -30C and 150C using a second heat at a scanning rate of 10C/minute.

Ethylene/α-olefin/diene terpolymers may also be used in the practice of this invention. Suitable α-olefins include the α-olefins described above as suitable for making ethylene/α-olefin copolymers. The dienes suitable as monomers for preparation of such terpolymers are either conjugated or nonconjugated, typically nonconjugated dienes having from 6 to 15 carbon atoms. Representative examples of suitable nonconjugated dienes that may be used to prepare the terpolymer include:

a) Straight chain acyclic dienes such as 1,4-hexadiene, 1,5-heptadiene, piperylene and 1,6-octadiene;
b) branched chain acyclic dienes such as 5-methyl-1,4-hexadiene, 3,7-dimethyl-1,6-octadiene, and 3,7-dimethyl-1,7-octadiene;
c) single ring alicyclic dienes such as 4-vinylcyclohexene, 1-allyl-4-isopropylidene cyclohexane, 3-allylcyclopentene, 4-allylcyclohexene, and 1-isopropenyl-4-butenylcyclohexane;
d) multi-ring alicyclic fused and bridged ring dienes such as dicyclopentadiene; alkenyl, alkylidene, cycloalkenyl and cycloalkylidene norbornenes such as 5-methylene-2-norbornene, 5-methylene-6-methyl-2-norbornene, 5-methylene-6,6-dimethyl-2-norbornene, 5-propenyl-2-norbornene, 5-(3-cyclopentenyl)-2-norbornene, 5-ethylidene-2-norbornene, and 5-cyclohexylidene-2-norbornene; and the like.

The preferred dienes are selected from the group consisting of 1,4-hexadiene, dicyclopentadiene, 5-ethylidene-2-norbornene, 5-methylene-2-norbornene, 7-methyl-1,6-octadiene, piperylene; 4-vinylcyclohexene.

The preferred terpolymers for the practice of the invention are terpolymers of ethylene, propylene and a nonconjugated diene (EPDM). Such terpolymers are or will be commercially available from such companies as DuPont Dow Elastomers L.L.C.

The total diene monomer content in the terpolymer may suitably range from 0.1 to 15 weight percent, preferably 0.5 to 12 weight percent, and most preferably 1.0 to 6.0 weight.

Both the ethylene copolymers and the ethylene terpolymers comprise from 20 to 90 wt. %, preferably from 30 to 85 wt. %, ethylene with the other comonomers comprising the balance. The ethylene copolymers and terpolymers preferably have a weight average molecular weight ($M_w$) of at least 10,000, and more preferably at least about 15,000, and may have a $M_w$ of up to 1,000,000 or higher, preferably up to 500,000.

The elastomeric polymer is preferably substantially amorphous. The expression "substantially amorphous" means that the polymer has a degree of crystallinity less than 25%. The elastomeric polymer more preferably has a crystallinity less than 15%

The elastomeric polymer may be the product of a single polymerization reaction or may be a polymer blend resulting from physical blending of polymers obtained from different polymerization reactions and/or resulting from using a mixed polymerization catalyst.

"Functionalized elastomeric polymer" means an elastomeric polymer or elastomeric polymer blend that comprises at least one reactive substituent that will react with the reactive substituents of the crosslinking agent to at least partially vulcanize the elastomer. Reactive elastomer substituents are selected from the group consisting of carboxylic acid, carboxylic anhydride, carboxylic acid salt, hydroxy, epoxy, and isocyanate.

A preferred functionality-imparting compound for the elastomeric substituent has ethylenic unsaturation to permit integration of that compound with the functionality intact into the elastomeric polymer either as a graft or as a comonomer. The preferred compound may be represented by the formula:

$$R^1X_m(R^2)_n \qquad (I)$$

in which $R^1$ represents an ethylenically unsaturated predominantly hydrocarbyl (or hydrocarbylene) group (referred to hereafter as "hydrocarbyl(ene)"), each X may be the same or different and represents a reactive moiety selected from carboxylic acid carboxylic anhydride, carboxylic salt, carbonyl halide, hydroxy, epoxy and isocyanate, $R^2$ represents a predominantly hydrocarbyl group, m represents an integer which is greater than or equal to 1, and n represents an integer greater than or equal to 0. Preferably m is in the range from 1 to 4, more preferably 1 or 2, and n is preferably 0. When grafted onto the elastomeric polymer, this compound preferably has just one ethylenic unsaturation per molecule.

Preferred functionality imparting compounds may be represented either by the formula

$$R^3 - (R^4X)_y - CH = CH - (R^4X)_z - R^3 \qquad (II)$$

in which $R^3$ represents H cr a predominantly hydrocarbyl group, $R^4$ represents a predominantly hydrocarbylene group, X is as defined above, y is an integer from 0 to 4, z is an integer from 0 to 4, and y + z > 0, preferably ≤ 2, or by the formula

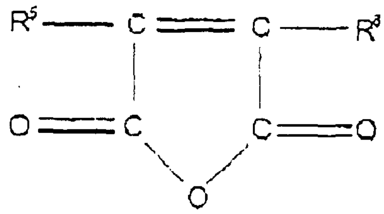

(III

in which $R^5$ and $R^6$ are independently hydrogen or a $C_1$-$C_{20}$ alkyl, and one can join with the other to form an alicyclic structure.

The predominantly hydrocartyl(ene) group Is a hydrocarbyl or hydrocarbylene group preferably having from 2 to 30 carbon atoms and more preferably having from 2 to 12 carbon atoms, and having not more than 50 moi%, preferably not more than 20 mol%, more preferably not more than 1 mol%, hetero-atoms (excluding the hetero atoms which comprise the reactive groups). The predominantly hydrocarbyl(ene) group may be straight or branched aliphatic, optionally having one or more hetero atoms in the carbon chain and preferably alkyl or alkylene, which preferably has from 2 to 30, more preferably from 2 to 12, carbon atoms; aromatic, optionally having one or more hetero- atoms as ring members and preferably having 6 ring members, more preferably phenyl or phenylene; cycloaliphatic optionally having one or more hetero-atoms as ring members and preferably having 5 to 10 ring members; fused polycyclic ring systems containing one or more of the aforementioned aromatic and/or aliphatic rings and compounds which combine two or more of the aforementioned aliphatic, aromatic, cycloaliphatic and fused polycyclic ring moieties.

Examples of preferred ethylenically unsaturated predominantly hydrocarbyl(ene) compounds include vinyl and vinylene, particularly cis-vinylene, and predominantly hydrocarbyl compounds having these groups such as α-olefins, norbornene, allyl, styrene, and dienes. Suitable α-olefins include the α-olefins described above as suitable for making ethylene/α-olefin copolymers. Suitable dienes include those described above as suitable monomers for the preparation of terpolymers.

Unsaturated predominantly hydrocarbyl(ene) compounds having at least one reactive group include unsaturated compounds having at least one carboxylic functionality, including carboxylic acids, carboxylic anhydrides, and salts of carboxylic acids. The cations of the carboxylic acid salts may be any metal or nonmetal cation, but preferably is a metal ion of Group IA or IIA of the Periodic Table of the Elements as printed in the 71st Edition of the CRC Handbook of Chemistry and Physics at page 1-10 (1990-1991), e.g. sodium, potassium, and calcium. Preferably, these unsaturated predominantly hydrocarbyl compounds have one or two carboxylic functionalities. Representative examples of unsaturated predominantly hydrocarbyl compounds having carboxylic functionality include acrylic, methacrylic, itaconic, crotonic, α-methyl crotonic, citraconic, succinic, phthalic, tetrahydrophthalic, and cinnamic acids, and their anhydride, ester and salt derivatives, if any. These compounds are commercially available or can be derived from commercially available compounds via procedures well known in the art.

The acid anhydride group-containing unsaturated compounds are preferred. Representative examples of the acid anhydride group-containing unsaturated compounds include maleic anhydride, itaconic anhydride, chloromaleic anhydride, citraconic anhydride, butenyl-succinic anhydride, and tetrahydrophthalic anhydride. Maleic anhydride is particularly preferred.

Unsaturated compounds having at least one reactive group also include unsaturated compounds having at least one carbonyl halide functionality, which are sometimes also referred to as Friedel-Crafts acylating agents, in which the halide may be fluoride, chloride, bromide or iodide, preferably chloride. Included among these compounds are predominantly hydrocarbyl carbonyl halides having at least one vinyl unsaturation and having one or more carbonyl halide substituents. These compounds are either commercially available or can be derived from the corresponding predominantly hydrocarbyl carboxylic acids described above by procedures well known in the art. Representative examples of the carbonyl halide containing unsaturated compounds include the acryloyl, methacryloyl, maleoyl, itaconoyl, citraconoyl, tetrahydrophthaloyl, and cinnamoyl halides. Acryloyl chloride, methacryloyl chloride, and maleoyl chloride are preferred.

The hydroxy group containing unsaturated compound is a compound having an hydroxy group and an unsaturation which is copolymerizable with an ethylenically unsaturated compound. Illustrative hydroxy group containing compounds are 3-hydroxy-1-propene, 4-hydroxy-1-butene, 6-hydroxy-1-hexene and 8-hydroxy-1-octene.

The epoxy group-containing unsaturated compound is a compound having an epoxy group and an unsaturation which is copolymerizable with an olefin or ethylenically unsaturated compound. The epoxy group-containing

unsaturated compounds include, for example, unsaturated glycidyl esters, unsaturated glycidyl ethers, epoxyalkylenes, p-glycidyl-styrenes and the like. These may be represented by the following formulae (IV), (V), and (VI):

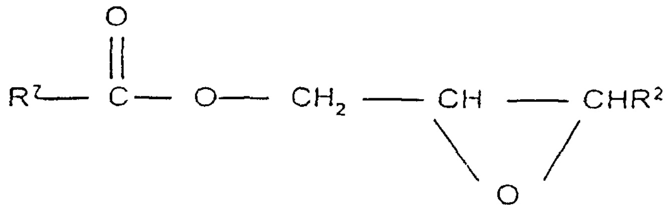

(IV)

wherein $R^7$ is a $C_{2\text{-}18}$ hydrocarbon group having an ethylenic unsaturation;

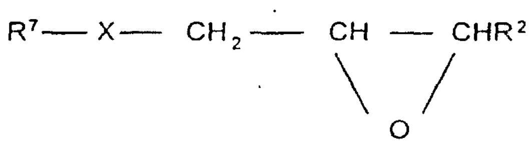

(V)

wherein $R^7$ is as defined above and X is

$-CH_2-O-$ , or 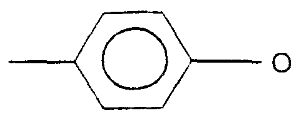

and

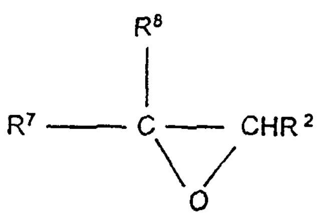

(VI)

wherein $R^7$ and $R^2$ are as defined above and $R^8$ is a hydrogen atom or a methyl group.

Specific examples of the epoxy group-containing unsaturated compound include glycidyl acrylate, glycidyl methacrylate, glycidyl itaconate, glycidyl butenate, allyl glycidyl ether, 2-methylallyl glycidyl ether, styrene-p-glycidyl ether, 3,4-epoxybutene, 3,4-epoxy-3-methyl-1-butene, 3,4-epoxy-1-pentene, 3,4-epoxy-3-methylpentene, 5,6-epoxy-1-hexene, vinylcyclohexene monoxide, and p-glycidylstyrene.

Unsaturated predominantly hydrocarbyl(ene) compounds having at least one reactive group further include unsaturated compounds having at least one isocyanate group. Preferred among these compounds are those in which the unsaturated predominantly hydrocarbyl(ene) moiety is an unsaturated aliphatic group, more preferably an α-unsaturated alkyl group having from 2 to 22 carbon atorris. Representative examples of such compounds include vinyl isocyanate; α-olefin isocyanates having from 3 to 8 carbon atoms in the α-olefin, such as 3-isocyanato-1-propene, 4-isocyanato-1-butene, 6-isocyanato-1-hexene, and 8-isocyanato-1-octene; isocyanato ethyl acrylate and isocyanato methacrylate.

The unsaturated compounds having at least one reactive group can include compounds having combinations of different reactive groups as long as they do not react with each other under polymer melt processing conditions such that they are not available to react with reactive substituents of the crosslinking compound. Suitable combinations

include any combination of two or more carbonyl functionalities, such as the combination of carboxylic acid and carboxylic anhydride or the combination of carboxylic acid and hydroxy.

The above-described unsaturated compounds having reactive groups may be used alone, or two or more can be used in combination with one another.

The amount of the unsaturated compound having reactive substituents used to functionalize the elastomeric polymer is preferably sufficient to provide at least two functional groups per elastomeric polymer chain or sufficient functionality to permit the functionalized elastomeric polymer to crosslink beyond the gel point given sufficient crosslinking agent and more preferably sufficient to achieve commercially acceptable compression set and other rubber properties. This amount is generally at least 0.01 wt%, preferably at least 0.1 wt%, and more preferably at least 1 wt%, unsaturated compound up to an amount varied by convenience, preferably up to 20 wt%, more preferably up to 10 wt%, unsaturated compound based on the total weight of the elastomeric polymer. These unsaturated compounds are incorporated into the elastomeric polymer either by adding these compounds as a comonomer during preparation of the elastomeric polymer as described, for example, in US-A-4,839,425, or by post-polymerization grafting onto the elastomeric polymer. Post-polymerization grafting is preferred.

The unsaturated organic compound can be grafted to the elastomeric polymer by any known technique, such as one of those taught in US-A-3,236,917 and US.-A-5,194,509. For example, in the '917 patent the polymer is introduced into a two-roll mixer and mixed at a temperature of 60 C. The unsaturated organic compound is then added along with a free radical initiator, such as, for example, benzoyl peroxide, and the components are mixed at 30 C until the grafting is completed. In the '509 patent, the procedure is similar except that the reaction temperature is higher, e. g., 210 to 300 C, and a free radical initiator is not used at a reduced concentration.

An alternative and preferred method of grafting is taught in US-A-4,950,541 by using a twin-screw devolatilizing extruder as the mixing apparatus. For example, an elastomeric polymer and unsaturated functionality-imparting organic compound are mixed and reacted within the extruder at temperatures at which the reactants are molten and in the presence of a free radical initiator. Preferably, the unsaturated functionality-imparting organic compound is injected into a zone maintained under pressure within the extruder.

Methods for preparing functionalized elastomeric polymer by grafting the functionality onto ethylene/propylene copolymer elastomer are also disclosed in US-A-4,134,927.

Preferably, the functionalized elastomeric polymer is soft and elastomeric in nature (e.g., having a low tensile yield, preferably below 400 psi).

The functionalized elastomeric polymer need not be a single rubber but may also be a blend of one or more functionalized elastomeric polymers. It may also include nonetastomeric polymers, either as impurities or as reinforcers at up to 100 parts per 100 parts functionalized elastomeric polymer.

The crosslinking agent contains at least two (2) reactive substituents selected such that these cross-linking substituents will react with those of the elastomeric substituent to at least partially vulcanize the elastomer. When the reactive substituent of the elastomeric polymer Is an epoxy, then the crosslinking agents are selected from the group consisting of carboxylic acid, carboxylic anhydride, carboxylic acid salt, carbonyl halide, hydroxy and isocyanate. When the reactive substituent of the elastomeric polymer is carboxylic anhydride, then the crosslinking agents are selected from the group consisting of hydroxy, epoxy and isocyanate.

Especially preferred crosslinking agents may be defined by the formula

$$R^2_p X_q \qquad \text{(VII)}$$

wherein $R^2$ represents a predominantly hydrocarbyl(ene) group as defined above, X represents the reactive functionality as defined above. p is an integer ≥0, preferably ≥1, more preferably 1, and q is an integer ≥ 2, more preferably 2 to 4 and even more preferably 2. These may be represented by the formula

$$X\text{-}(R^2)_p\text{-}X \qquad \text{(VIII)}$$

in which $R^2$ is as defined above and is preferably an aliphatic group, more preferably an alkylene group, having from 1 to 12 carbon atoms; an aromatic group, preferably phenyl; or an aliphatic aromatic group such as toluene or methylene diphenyl. X is as defined above.

Representative examples of crosslinking agents having at least one reactive group include dicarboxylic functionalities such as oxalic, malonic, succinic, adipic, suberic, phthalic, isophthalic, terephthalic, hexahydrophthalic, toluic, and pyromellitic, acids, esters, salts and anhydrides, if possible, such as phthalic anhydride, pyromellitic anhydride, hexahydrophthalic anhydride, and succinic anhydride; acyl halides of the aforementioned dicarboxylic functionalities;

aliphatic diisocyanates such as methyl diisocyanate, ethyl diisocyanate, propyl diisocyanate, and the like; aromatic diisocyanates such as phenyl diisocyanate, tolyl diisocyanate, etc.; diol and polyol compounds, such as glycerine, pentaerithritol, polyethylene glycol with two terminal alcohol's, ethylene glycol, propanediol, butanediol, glucose, sucrose, and 1,4-benzenedimethanol; epoxy compounds such as epoxidized soybean oil; ether compounds such as bisphenol A diglycidyl ether, glycidyl ether of aliphatic polyol, silico-glycidyl resin, 1,4-butanediol diglycidyl ether, ethylene glycol diglycidyl ether, glycidyl ethers of polynuclear phenols, and glycidyl ether of tris-p-hydroxyphenyl methane, etc.; and isocynate compounds such as methyl diisocyanate, tolyl diisocyanate, hexyl diisocyanate and the like.

The crosslinking agents may be nonpolymeric or polymeric. They have a number average molecular weight less than 2000, more preferably less than 1500, and even more preferably less than 800.

In general, the concentration and reaction conditions will depend on the reactivity of the selected functionalized elastomeric polymer/crosslinking agent pair. Preferably there is an approximate stoichiometric equivalence between the concentration of the crosslinking agent reactive sites and the functionalized elastomeric polymer reactive sites. A small excess of the less reactive component is acceptable, but too large an excess of the crosslinking agent may lead to ineffective network formation during crosslinking.

Optionally, a catalyst may be incorporated to accelerate the crosslinking reaction. Suitable catalysts will be obvious to those skilled in the art. For the preferred composition of maleic anhydride grafted rubber crosslinked with a glycidyl ether (epoxy), a suitable catalyst is an amine such as 2-methyl imidazole.

The thermoplastic polymer used in the melt processible thermoplastic compositions and the processes for making and using those compositions according to this invention is any polymer which may be remelted after it has previously been melt processed and extruded into a shaped article. It may be substantially crystalline, for example, polypropylene or HDPE, or substantially noncrystalline, such as the elastomeric polymers described above. The thermoplastic polymer is preferably substantially crystalline.

The expression "substantially crystalline" means that the polymer has at least 25% crystallinity. More preferably, the thermoplastic polymer has at least 50% crystallinity and even more preferably the thermoplastic polymer has at least 75% crystallinity. If a high degree of flexibility is desired in the final product made with the thermoplastic vulcanizites of this invention, the thermoplastic polymer preferably has less than 20% crystallinity.

The thermoplastic polymer is preferably a polyolefin, but other polymers such as polyesters, polycarbonates, polyphenylene sulfide, polyphenylene oxide, polyvinyl chloride, may also be used, provided that the thermoplastic polymer does not crosslink with the crosslinking agent and/or the functionalized elastomeric polymer to the extent that its (i.e. the thermoplastic polymer's) processability and/or its thermoplastic nature during melt processing (as defined above) is substantially diminished or in other words, the thermoplastic polymer is not crosslinked to the point at which it loses its ability to be compression molded into a smooth sheet or made into a continuous sheet on a roll mill by the action of the crosslinking agent used for the crosslinking of the functionalized elastomeric polymer.

The thermoplastic polymer may be the product of a single polymerization process or may be a polymer blend such as that resulting from dry blending or melt blending (i.e., a physical blending process) and/or resulting from using a mixed catalyst in a single reactor to make two or more different polymers simultaneously. Functional groups may be present which may be introduced into the thermoplastic polymer via comonomers during polymerization of that polymer or via post-polymerization grafting reactions such as those described above for making the functionalized elastomeric polymers, with the caveat that if the functionalized elastomeric polymer and crosslinking agent are introduced into the thermoplastic polymer before carrying out vulcanization of the functionalized elastomeric polymer, the functional groups are not present in the thermoplastic polymer to the extent that the thermoplastic polymer becomes substantially crosslinked as defined above.

Examples of such polymers include high density polyethylene (HDPE), low density polyethylene (LDPE), linear low density polyethylene (LLDPE), ultra low density polyethylene (ULDPE), polypropylene, ethylene-propylene copolymer, ethylene-styrene copolymer, polyisobutylene, ethylene-propylene-diene monomer (EPDM) (for those applications in which rigidity may be an important property of the article made from the composition of this invention, then typically the propylene content is greater than 50 wt. %), polystyrene, acrylonitrile-butadiene-styrene (ABS) copolymer, ethylene/vinyl acetate (EVA), polymers of ethylene and carbon monoxide (ECO, including those described in U.S. Pat. No. 4,916,208), or ethylene, propylene and carbon monoxide (EPCO) polymers.

The thermoplastic polyethylenes (PE) include ethylene homopolymers and interpolymers, such as substantially linear ethylene/alpha-olefin interpolymers made using constrained geometry catalyst technology, linear low density copolymers (LLDPE), high pressure low density PE (LDPE), high density polyethylene (HDPE), and other ethylene polymers known to the art. Ethylene copolymers with polar monomers such as vinyl acetate, and so forth are also included with the caveat set forth above.

Thermoplastic higher polyolefins and their copolymers are also suitable. For example, polypropylene (PP), poly-4-methyl-1-pentene, polybutene, and copolymers such as ethylene-propylene rubber or ethylenepropylene-diene rubber are suitable. Diene rubbers may be used as the thermoplastic polymer with the caveat set forth above.

Nonpolyolefin thermoplastic polymers may be used, such as polycarbonate, polystyrene, syndiotactic polystyrene, polyamide, polyester, polyvinyl chloride (PVC), polyurethane, etc. to the extent that it is not substantially crosslinked during melt processing as defined above. The thermoplastic polymer need not be a single polymer, but may also be a blend of one or more thermoplastic polymers.

If the thermoplastic polymer is to be present during vulcanization of the functionalized elastomeric polymer, the thermoplastic polymer is preferably substantially unreactive with the selected crosslinking agent so that the thermoplastic polymer remains thermoplastic during vulcanization of the rubber. If a multistep process is used whereby the rubber is vulcanized and ground to fine particles prior to dispersion in the thermoplastic polymer, then the thermoplastic polymer may include reactive substituents (and in fact could even be the same polymer as the functionalized elastomeric polymer).

The preferred thermoplastic polymer will depend on the intended use. For maximum softness, a low modulus (i.e., high comonomer content) polymer is preferred, such as ethylene 1-octene, ethylene 1-hexene, ethylene 1-butene or ethylene propylene copolymer, with ethylene 1-octene produced by the solution process using a constrained geometry metallocene catalyst being most preferred. For high temperature property retention, propylene-based polymers, such as crystalline polypropylene or high propylene content ethylene propylene copolymers are preferred. For the most oil extended applications, a crystalline thermoplastic matrix such as HDPE or crystalline PP is preferred for obtaining the desired physical properties.

The molecular weight of the thermoplastic polymer may vary with the application. Low molecular weight thermoplastic polymers can be easier to process and produce smooth surface finishes. High molecular weight thermoplastic polymers may be used to produce stronger compositions. The number average ($M_n$) molecular weight is from 7,000 to 1,000,000 or more, preferably from 10,000 to 500,000.

Many different adjuvants or additives are known to modify elastomer costs and/or properties, and these may optionally be used in the present invention. Nonlimiting examples include fillers such as various carbon blacks, clays, silica, alumina, calcium carbonate; extender oils, e.g. aromatic oils, paraffinic oils or naphthenic oils including aliphatic or napthenic or polyester oils; pigments, such as titanium dioxide; processing aids such as lubricants and waxes (e.g., steric acid); phenolic, thioester and phosphite antioxidants such as Irganox 1010™ (commercially available from Ciba-Geigy) or Weston 619™ (commercially available from General Electric); acid neutralizers such as MgO, calcium stearate, dihydrotalcite, tin mercaptans, and tetrasodium pyrophosphate; and plasticizers such as dialkylphthalates, trialkylmellitates and dialkyladipates. Adjuvants may be added before or after vulcanization Depending on the nature of the adjuvant and its interaction with the selected crosslinking chemistry, preferably the adjuvant may be added after dynamic vulcanization. Preferably, the processing oils and/or plasticizers and inorganic fillers are added to improve the compositions's processing characteristics and the particular amounts used depend, at least in part, upon the quantities of other ingredients in the composition and the desired properties of the composition. Generally, amounts from 5 to 50 parts by weight based, on the total weight of the polymer (s), of fillers can be used and 10 to 100 parts by weight, based on total weight of the polymer(s), of compounding ingredients such as processing oils and plasticizers can be used.

One vulcanization process used in the practice of this invention is static vulcanization, e.g. (i) low-temperature mixing of the vulcanizing agent and the functionalized elastomeric polymer, (ii) molding or shaping the resulting mixture, and (iii) heating the molded or shaped mixture to cause at least a partial vulcanization of the mixture. "Low-temperature mixing" means that the vulcanizing agent and the functionalized elastomeric polymer are blended with one another at a combination of temperature and time at which little, if any, vulcanization occurs. Molding or shaping are done at a combination of temperature and time at which little, if any, vulcanization occurs. The molded or shaped mixture is usually heated only to that temperature necessary to effect vulcanization (thus avoiding any unnecessary degradation of either the vulcanizing agent or the functionalized polymer (or any adjuvant that might also be present)). The vulcanization process can be done on a solvent, i.e., mix or dissolve the functionalized elastomer with the crosslinking agent and then evaporate the solvent and cure the mixture at a high temperature.

There are many conceivable methods for producing a thermoplastic vulcanizate within the scope of this invention. The dynamic vulcanization process may include any of the methods taught in the literature, except that instead of the conventional vulcanization processes of sulfur cure, peroxide crosslinking or phenolic resin curing, vulcanization takes place through the action of the vulcanizing agent on the reactive substituent of the functionalized elastomeric polymer as defined herein. Suitable methods are described in US-A-4,130,535. Nonlimiting examples include:

1. Dynamic vulcanization of a blend of thermoplastic polymer and functionalized elastomer polymer.
2. Vulcanization of functionalized elastomeric polymer, followed by grinding and blending with thermoplastic polymer.
3. In-reactor blends of the two polymers in a polymerization process with vulcanization of the functionalized elastomeric polymer occurring in solution, preferably with dynamic mixing of the solution, followed by devolatilization.
4. Crosslinking of functionalized elastomeric polymer in dynamically mixed solution (e.g., a low molecular weight solvent) followed by devolatilization and blending these crosslinked particles with thermoplastic polymer.

5. In-reactor blends of two polymers in a polymerization process, followed by devolatilization and subsequent dynamic vulcanization in the melt phase.
6. Functionalizing an elastomer with reactive substituents followed by addition of a thermoplastic polymer and dynamic vulcanization in a one-step process using, for example, a multi-zone twin-screw extruder.

Dynamic vulcanization may be carried out in a batch mixer such as a Brabender or Banbury mixer, in a Farrel continuous mixer, or in an extruder, with a twin screw extruder having intensive mixing screw elements being preferred. Crosslinking is conducted during mixing and shearing so as to dynamically crosslink the functionalized elastomeric polymer. Mixing and shearing are carried out for a time sufficient to allow for dynamically crosslinking the functionalized elastomeric polymer and for comminuting the crosslinked elastomer resulting in the elastomer being dispersed throughout the crystalline polyolefin resin. Adequacy of mixing can be determined by observing the processability of the compositions by means of a piston rheometer.
For dynamic vulcanization, the weight ratio of thermoplastic polymer phase to the elastomeric polymer phase in the starting reaction mixture and also in the resulting thermoplastic vulcanizate is preferably in the range from 95:5 to 5:95, more preferably in the range of 60:40 to 5:95, and even more preferably in the range from 60:40 to 25:75.
Temperature requirements for the blending or dynamic vulcanization process will vary with the melting points of the thermoplastic polymer, the functionalized elastomeric polymer and other ingredients. Preferably, the temperature is minimized to minimize degradation during processing and to maximize mechanical work. If necessary for processability, the temperature may be increased. For most functionalized elastomeric polymers and thermoplastic polymers, 80-350 C is an appropriate processing temperature range, with 150-275 C being preferred. Due to the facile reactivity of the hydroxy, epoxy and isocyanate with carboxylic anhydride, particularly with catalyst, crosslinking can occur readily even at moderate temperatures such as <200 C. Optimization of the dispersion versus cure time may be required to obtain uniformly crosslinked rubber particles within a reasonable reaction time, though this optimization is not required in order to obtain substantial improvements in properties.
Dynamic vulcanization may be carried out in one or more steps, with extender oil, and fillers, added at one or more steps. Thus, for example, oil and polymer may be blended together and then crosslinking agent added, or a thermoplastic vulcanizate (TPV) made as previously described may be dynamically vulcanized with additional rubber.
A "one-step process" may also be used to make a thermoplastic vulcanizate in which the elastomeric polymer is functionalized with reactive substituents, followed by addition of the thermoplastic polymer and dynamic vulcanization, all done in one step without isolation of the functionalized elastomeric polymer. This may, for example, be conducted in a multi-zone twin-screw extruder.
Other suitable methods for preparing dispersions of vulcanized elastomer particles in a thermoplastic polymer in accordance with this invention will be apparent to those skilled in the art given the description herein.
The thermoplastic vulcanizates of this invention, can be processed using conventional plastic processing equipment. Articles molded from the thermoplastic compositions of the present invention exhibit properties generally only associated with vulcanized rubber. For example, the thermoplastic compositions of the present invention usually have tensile strength values of 9 to 25 MPa and elongation at break values of 150 to 700%.
Crosslinking agent and/or catalyst may be introduced via a concentrate (such as in the elastomer or thermoplastic polymer) or as neat materials or as solutions in appropriate solvents. Liquids may be imbibed directly by the functionalized elastomeric polymer or thermoplastic polymer and introduced into a mixer or extruder directly in that fashion.
The crosslinked elastomer can be used in many applications such as wire and cable coatings, roofing membranes, floor coverings, gaskets, hoses, boots, automotive parts, weatherstripping, and other parts known to require elastomeric materials. Various uses specifically for the thermoplastic elastomer compositions include wire insulation and coverings, seals and gaskets, hoses, roofing membranes, floor coverings, boots, automotive parts and trim, sheet liners, and packaging films. The melt processable thermoplastic compositions within the scope of this invention can, for instance, be fabricated into tubing for laboratory, medical, and industrial uses. Such tubing can also be used as the inner tube of reinforced hoses, wherein the extruded tube is overlaid with wire or textile cords applied as a spiral, knit, or braid, optionally having a polymeric layer over the reinforced tubing. The thermoplastic elastomer compositions can also be used as the protective covering of reinforced tubes of similar or different composition.
The following examples are illustrative of the present invention. The present invention should not be considered in any way limited by these examples. Unless otherwise specified, all parts, percentages, and ratios are by weight.

## EXAMPLES

**Materials:**

GFR1 -- a maleic anhydride (MAH) functionalized ethylene 1-octene copolymer rubber, the ethylene/1-octene

copolymer used to make the graft rubber being a copolymer produced in a solution polymerization process from a constrained geometry single site catalyst. The final graft copolymer rubber had a melt index of approximately 0.5 g/10 min., density of 0.87 g/cc, and MAH content of 1 wt.%.

GFR2 -- the same ethylene 1-octene copolymer rubber as used to make GFR1 functionalized with MAH such that the MAH content is 1.9 wt.% (density of 0.87 g/cc).

HD1 -- a high density crystalline thermoplastic polyethylene resin, (commercially available from The Dow Chemical Co.) HDPE 10062, 10 MI, 0.962 g/cc density.

PP1 -- Himont Profax™ 6723, a crystalline thermoplastic polypropylene resin.

EO -- Ethylene/1-octene copolymer (EO) is made from single-site catalyst, and has a density of 0.8687 g/cc and melt index (MI) of 0.94 g/10 min.

EP -- Ethylene/ propylene copolymer (EP) is Vistalon™ 707 (commercially available from Exxon) that has a density of 0.872 g/cc and MI of 0.48 g/10 min.

EPDM -- Ethylene/propylene 1,4-hexadiene terpolymer (EPDM) is Nordel™ 2722 (commercially available from Dupont Dow Elastomers LLC) that has a density of 0.878 g/cc and MI of 0.1g/10 min.

XLA1 -- a difunctional crosslinking agent, DER 383 (commercially available from The Dow Chemical Co.), which is a glycidyl ether of bisphenol A having an epoxide equivalent weight of 176 - 183.

XLA2 -- a trifunctional crosslinking agent, TACTIX™ 743 (commercially available from The Dow Chemical Co.), which is a glycidyl ether of tris-p-hydroxyphenyl methane having an epoxide equivalent weight of 165.

XLA3 -- Glycerine.

XLA4 -- PEG400, a polyethylene oxide commercially available from The Dow Chemical Co. having -OH end groups and a number average molecular weight of 400.

CXLA1 -- triethylene tetraamine (TETA) commercially available from Aldrich Chemical Co.

CXLA2 -- N, N'-dimethyl-1,6-hexanediamine (DMHDA), 98% purity, from Aldrich Chemical Co.

CAT1 -- 2-methylimidazole.

SUNPAR 2280 -- aliphatic extender oil (commercially available from Sun Oil Co.)

IRGANOX™ B225 -- an antioxidant mixture of phenolic and phosphite antioxidants (commercially available from Ciba-Geigy).

Irganox™ B900 (B900) is an antioxidant mixture of phenolic and phosphite antioxidant commercially available from Ciba-Geigy.

2-Methylimidazole (2-MI) is from Aldrich Chemical Co.

Di-Cup$^{tm}$ R dicumyl peroxide from Hercules is used for peroxide cured samples.

**Procedure 1. Thermoset Elastomers**

For Examples 1 to 4 below, mixing and blending are conducted in a Rheomix™ 600 mixer operating at 60 revolutions per minute (rpm). The product made according to Examples 1 to 4 is compression molded to a plaque 0.16 cm x 10.2 cm x 10.2 cm (1/6" X 4" X 4") at 130°C for 4 min. and cured at 190°C for 23 minutes. The curing rate of the sample is measured by oscillating disk rheometry.

**Test Methods:**

Vulcanization characteristics of the new elastomer are determined using the Monsanto ODR according to ASTM D 2084. Tensile properties are tested on an Instron Series IX Automated Testing System 1.04. Machine parameters of test are: Sample rate 18.21 pts/sec; Crosshead speed:

5.08 cm/min. (2.00 in./min.); Full Scale Load Range: 4.536 kg. (10.00 Ibs.); Humidity: 50%; Temperature: 23°C (73°F).

**Example 1**

GFR1 (46.6 g) and B900 antioxidant (0.144 g) are melt mixed at 110 C for 5 minutes. Following melting of the polymer, epoxy compound (1.5 g, XLA1) is added slowly in about 3 minutes. The mixture is mixed for an additional 4 minutes.

**Example 2**

GFR1 (39.6 g) and oil (7.2 g, SUNPAR 2280) are melt mixed for 5 min as described in Example 1. Epoxy compound (1.3 g, XLA1) is added slowly in 3 min., followed by catalyst (0.005 g, 2 MI). The mixture is mixed for an additional 4 minutes.

**Example 3**

GFR1 (46.6 g) is melt mixed 5 minutes as described in Example 1. Epoxy compound (1.5 g XLA1) is added slowly in 3 min, followed by catalyst (0.005 g 2-MI).

**Example 4**

GFR2 (46.6g) is melt mixed with B900 antioxidant (0.144 g) at 130 C for 5 minutes. After the polymer is melted, the temperature is reduced to 110 C. Epoxy compound (3 g, XLA1) is then added slowly over about 3 minutes. The mixture is mixed for additional 4 minutes.

**Comparative Examples 1 to 3**

Comparative Examples 1 to 3 are EO, EP, and EPDM samples, respectively, cured with peroxide by the following procedure. Each polymer type is melt blended in a Haake Torque Rheometer equipped with a Rheomix 600 mixer. The torque rheometer is operated isothermally at 120 C and at mixing speed of 20 rpm with a heated nitrogen purge in a closed mixer for 20 minutes total mixing time. 4 PHR (parts by weight per hundred parts resin) Di-Cup R dicumyl peroxide is incorporated by weighing into an envelope molded from the base resin of each type. This is added into the polymer melt at the beginning of each run. The molten polymer is removed from the mixer and compression molded at 138°C for 1 minute into 15.2 cm x 15.2 cm x 1.27 nm (6 inch x 6 inch x 50 mil) plaques and then cooled immediately on room temperature water cooled platens. These plaques are each cut into four 7.6 cm x 7.6 cm x 1.27 nm (3 Inch x 3 inch x 50 mil) plaques. These smaller plaques are compression molded at 138 C for 2 minutes at 82.76 Mpa (12,000 psi) into 15.2 cm x 15.2 cm x 0.51 nm (6 inch x 6 inch x 20 mil) plaques and then cooled as described above. The second molding step is done to remove air bubbles. The 15.2 cm x 15.2 cm x 0.51 nm (6 inch x 6 inch x 20 mil) plaques are each cured at 182 C for 10 minutes in the hot press.

**Results:**

The results of Examples 1-3 and the Comparative Examples are shown in the Table below. Those results show that the thermoset elastomer prepared according to this invention has excellent tensile properties. For comparison purposes the tensile properties of two commercial rubbers cured with dicumyl peroxide are also measured. The tensile properties of Examples 1-3 are better than that of the commercially available samples. The crosslinked elastomer of this invention has much less odor in comparison to the peroxide cured systems. Catalyst can be used to accelerate the curing process. Oil can be used to improve the processability, reduce cost, and increase flexibility.

TABLE I

| Tensile Properties of Epoxy Cured MAH-g-EO | | | | | |
|---|---|---|---|---|---|
| System | Stress | | Elongation | Toughness | |
| | Mpa | (psi) | (%) | $cm\text{-}kg/cm^3$ | $(in\text{-}lb/in^3)$ |
| Example 1 | 11.03 | (1600) | 760 | 478.1 | (6800) |
| Example 2 | 7.59 | (1100) | 620 | 267.1 | (3800) |
| Example 3 | 9.66 | (1400) | 550 | 330.4 | (4700) |
| Compar. Ex. 1EO | 8.97 | (1300) | 800 | 393.6 | (5600) |
| Compar. Ex. 2 EPDM | 2.90 | (420) | 420 | 140.6 | (2000) |
| Compar. Ex. 3 EP | 4.76 | (690) | 630 | 189.8 | (2700) |

The results in Figure 1 show the Monsanto ODR curing rate of the thermosettable elastomers cured according to this invention at 175°C. The results show that epoxy curing agent reacts with anhydride groups of the graft functionalized elastomeric polymer to form crosslinked elastomer as evidenced by the increase in torque vs. curing time. Without the epoxy-graft, the polymer shows no increase in torque after melting.

**Procedure 2: Thermoplastic Elastomers**

Samples were prepared in a HaakeBuchler Rheomix mixer (either 600 or 3000E models, approx. 40 and 190 g. capacity, respectively) with roller style blades, attached to a HaakeBuchler Rheocord torque rheometer. Samples

removed from the mixer after preparation of the blends or thermoplastic vulcanizates were compression molded into approximately 60 mil thick plaques, then cut into microtensile bars for testing on an Instron tensile tester and for measuring Shore Hardness, and cut into circles for compression set testing.

**Test Methods:**

Tensile properties were measured using microtensile bars according to ASTM D-1708-79 at 13 cm./min. (5 in./min.) crosshead speed and at room temperature and at 70°C (in an environmental chamber).

Compression set was measured at 70°C and 22 hours using a 1.3 cm. (0.5 in.) thick multi-ply stack of test buttons according to ASTM D-395.

Oil resistance was determined at 121°C (250°F) and 70 hours according to ASTM D-471.

Heat aging stability was determined at 121C (250 F) and 7 days according to ASTM D-573.

**Examples 5-8 and Comparative Examples 4 and 5**

Polypropylene PP1 and graft-functionalized rubber GFR1 are melt mixed together in a Rheomix 3000E mixer at 60-70 rpm and 190°C. Extender oil, when present, is added after the polymers are melted. Following melting of the polymer or addition of the oil, whichever is later, the polymer is mixed for an additional time period of approximately 6 minutes. Then in Examples 5-8 of the present invention epoxy crosslinking agent XLA1 or XLA2 is added, followed by catalyst CAT1, and after a peak in torque is reached (approx. 2 mins.), Irganox™ B225 is added. In Comparative Examples 4 and 5, neither crosslinking agent nor catalyst is added. Three to six minutes after vulcanizing agent is added, the mixing is completed and the thermoplastic vulcanizate (TPV) samples are removed and sheeted on a roll mill, then compression molded into 1.5 nm (60 mil) plaques. The composition of each plaque is summarized in Table 2 below.

TABLE 2

| | Amounts in PHR | | | | | |
|---|---|---|---|---|---|---|
| Components | Compar. Ex. 4 | Compar. Ex. 5 | Ex. 5 | Ex. 6 | Ex. 7 | Ex. 8 |
| PP1 | 50 | 50 | 50 | 50 | 50 | 50 |
| GFR1 | 100 | 100 | 100 | 100 | 100 | 100 |
| Sunpar 2280 | 0 | 27 | 27 | 27 | 0 | 27 |
| Irganox B225 | 1.0 | 1.0 | 1.0 | 1.0 | 1.0 | 1.0 |
| XLA2 | 0 | 0 | 2.0 | 0 | 0 | 0 |
| XLA1 | 0 | 0 | 0 | 2.0 | 2.0 | 4.0 |
| CAT1 | 0 | 0 | 0 05 | 0.05 | 0.05 | 0.05 |

These plaques are tested for physical properties. The results are shown in Table 3 below.

TABLE 3

| | COMPARATIVE DATA | | | | | |
|---|---|---|---|---|---|---|
| **Physical Properties** | Compar. Ex. 4 | Compar. Ex. 5 | Ex. 5 | Ex. 6 | Ex. 7 | Ex. 8 |
| Specific Gravity | 0.84 | 0.83 | 0.83 | 0.83 | 0.83 | 0.84 |
| Shore A. Hardness | 87 | 84 | 90 | 84 | 86 | 80 |
| 100% Modulus, MPa(psi) | 6.32 (917) | 4.96 (588) | 5.39 (781) | 5.59 (810) | 8.30 (1204) | 6.03 (875) |
| 200% Modulus, Mpa (psi) | 7.20 (1044) | 4 47 (648) | 6.69 (970) | 7.06 (1024) | 10.02 (1454) | 8.07 (1170) |
| Tensile, Mpa (psi) (@21 C) | 8.60 (1247) | 5.37 (779) | 7.15 (1037) | 8.50 (1233) | 12.48 (1810) | 9.55 (1385) |
| Elongation, %(@21 C) | 465 | 474 | 246 | 320 | 356 | 286 |
| Tensile, Mpa (psi) (@70 C) | 0.59 (86) | 0.38 (55) | 2.14 (310) | 2.73 (396) | 2.53 (367) | 2.68 (389) |
| Elongation, % (@70 C) | 55 | 88 | 173 | 191 | 135 | 176 |
| Compression Set (21 C/22 hr) | 48 | 40 | 35 | 38 | 50 | 38 |
| Compression Set (70 C/22 hr) | 100 | 99 | 70 | 67 | 73 | 52 |
| Compression Set (100 C/70 hr) | 101 | 101 | 80 | 84 | 87 | 74 |

As compared to Comparative Example 4 (control sample), Example 7 shows that oil-free TPV's have higher modulus and tensile strength, especially at 70°C, and superior compression set at 70 or 100°C.

As compared to Comparative Example 5 (control sample with oil), Examples 5, 6, and 8 show that both XLA1 and XLA2 effectively increases tensile strength and compression set. Comparing Examples 6 and 8 shows that increasing the concentration of crosslinking agent increased the tensile properties and reduces the elongation, and improves compression set.

The functionalized elastomeric polymer used in these examples contains only 1% MAH. Thus the degree of crosslinking is limited. Higher MAH content generally produces higher crosslinking densities and further improvements in tensile properties and compression set. These results, however, are illustrative of crosslinking elastomeric polymers via grafted substituents, in accordance with this invention.

**Examples 9-11**

TPV's are produced in a Rheomix 600 mixer by mixing 26.6 g GFR1 with 13.4 g PP1 for 3 minutes at 190°C. Then either 1.3g XLA3 or 1.4g XLA1 are added and mixing is continued for 6-7 minutes for a total processing time of 10 minutes. In each case, a thermoplastic processible melt is obtained as the final product. Torque curves are obtained that show the rapid torque increases obtained in each example. The increase in torque at approximately 3 minutes is due to the vulcanization reaction that occurrs upon addition of the vulcanizing agent. XLA3 produces a torque increase of approximately 1100 m-g. XLA1 produces a torque increase of approximately 700 m-g. All torque increases are at a rapid rate such that the maximum in torque was achieved within approximately 1 minute following addition of the crosslinking agent.

**Example 12**

20 g. HD1 and 20 g GFR1 are mixed according to Examples 9-11. 0.49 g XLA1 and 0.0136 g CAT1 are added at approximately 5 minutes mixing time and mixing is continued for a total of 10 minutes processing time. A rapid torque increase is obtained, amounting to approximately 800 m-g. The resultant product is a thermoplastic melt.

**Examples 13-15 and Comparative Examples 6 and 7**

Examples 13-15 and Comparative Examples 6 and 7 are prepared using the same method as that used to prepare Examples 5-7 of the present invention, except the formulations are as shown in Table 4 below.

TABLE 4

| | Amounts in PHR | | | | |
|---|---|---|---|---|---|
| Components | Compar. Ex. 6 | Compar. Ex. 7 | Ex. 13 | Ex. 14 | Ex. 15 |
| PP1 | 100 | 100 | 100 | 100 | 100 |
| GFR2 | 50 | 50 | 50 | 50 | 50 |
| Sunpar 2280 | 28 | 28 | 28 | 28 | 29 |
| Irganox B225 | 1 | 1 | 1 | 1 | 1 |
| XLA1 | 0 | 0 | 6 6 | 0 | 0 |
| XLA3 | 0 | 0 | 0 | 0 | 1.76 |
| XLA4 | 0 | 0 | 0 | 7 7 | 0 |
| CXLA1 | 5.7 | 0 | 0 | 0 | 0 |
| CXLA2 | 0 | 5.6 | 0 | 0 | 0 |

As can be seen from Table 5, Examples 13-15 according to the present invention have a significantly lower yellowness index than that of Comparative Examples 6 and 7. The yellowness index, determined according to ASTM YI D 1250, is a standardized industry-accepted measure of the degree of polymer yellowing (discoloration).

TABLE 5

| | DATA | | | | |
|---|---|---|---|---|---|
| Physical Properties | Compar. Ex. 6 | Compar. Ex. 7 | Ex. 13 | Ex. 14 | Ex. 15 |
| 100% Modulus, MPa (psi) | 6.35 (920) | 5.72 (830) | 9.66 (1400) | 5.45 (790) | 6.35 (920) |
| 200 % Modulus, MPa (psi) | 19.45 (370) | 7.66 (1110) | -- | 7.52 (1090) | 9.17 (1330) |
| Tensile, Mpa (psi) (@21 C) | 14.72 (2135) | 16.48 (2390) | 11.45 (1660) | 10.31 (1495) | 13.62 (1975) |
| Elongation, % (@21 C) | 350 | 514 | 143 | 317 | 333 |
| Compression Set (70 C/22 hr) | 50 | 52 | 45 | 57 | 48 |
| Yellowness Index (ASTM D1250) | 245 | 175 | 120 | 111 | 110 |

Comparison of the yellowness index data of Comparative Examples 6 and 7 with that of Examples 13-15 shows much more color in the product crosslinked with amine than with an epoxy or hydroxy.

## Claims

1. A process for making an at least partially crosslinked clastomer, characterized in that the process comprises reacting, by contacting:

    (1) an elastomeric polymer, comprising ethylene/α-olefin interploymer containing reactive substituents, with
    (2) a crosslinking agent

        (a) containing two or more reactive substituents differing from those contained in the elastomeric polymer, and
        (b) having a number average molecular weight less than 2000,

    each of the reactive substituents selected such that

    (i) those of fhe elastomeric polymer will react with those of the crosslinking agent to at least partially crosslink the functionalized elasomeric polymer and
    (ii) each of the reactive substituents is selected from carboxylic acid, carboxylic anhydride, carboxylic acid

salt, hydroxy, epoxy and isocyanate.

**2.** A process for making a melt processible thermoplastic composition, the process comprising the step of dynamically vulcanizing:

(A) an elastomeric polymer, comprising an ethylene/α-olefin interpolymer containing reactive substituents, with
(B) a crosslinking agent containing two or more reactive substituents, in the presence of
(C) a thermoplastic polymer,

in which

(1) the elastomeric polymer contains two or more reactive substituents differing from those contained in the crosslinking agent, and
(2) the crosslinking agent has a number average molecular weight less than 2000,

each of the reactive substituents selected

(i) such that those of the elastomeric polymer will react with those of the crosslinking agent to at least partially crosslink the elastomeric polymer and
(ii) from the group consisting of carboxylic acid, carboxylic anhydride, carboxylic acid salt, carbonyl halide, hydroxy, epoxy, and isocyanate.

**3.** A process for making a melt processible thermoplastic composition, the process comprising the step of blending an:

(A) at least partially crosslinked elastomer with
(B) a thermoplastic polymer

in which the at least partially crosslinked elastomer is made according to Claim 1.

**4.** The process of any one of Claims 1 to 3 in which the α-olefin units of the elastomeric polymer have from 4 to 10 carbon atoms when the elastomeric polymer is an ethylene/α-olefin/diene terpolymer having reactive substituents.

**5.** The process of any one of Claims 1 to 3 in which the elastomeric polymer is an ethylene/α-olefin interpolymer with a density less than 0.9 $g/cm^3$.

**6.** The process of any one of Claims 1 to 5 in which the elastomeric polymer is an ethylene/α-olefin copolymer having reactive substituents.

**7.** The process of any one of Claim 6 wherein the α-olefin is propylene.

**8.** The process of any one of Claims 1 to 6 in which the α-olefin units of the elastomeric polymer have from 4 to 10 carbon atoms.

**9.** The process of Claim 8 in which the elastomeric polymer contains long chain branching.

**10.** The process of Claim 8 or 9 in which the α-olefin is 1-octene.

**11.** The process of any one of Claims 1 to 10 in which the elastomeric polymer comprises a functionality derived from a compound of formula

$$R^3\text{-}(R^4X)_y\text{-}CH\text{=}CH\text{-}(R^4X)_z\text{-}R^3 \qquad \text{(II)}$$

in which $R^3$ represents H or a predominantly hydrocarbyl group, $R^4$ represents a predominantly hydrocarbylene group, each X may be the same or different and represents a reactive moiety selected from carboxylic acid, carboxylic anhydride, carboxylic salt, hydroxy, and epoxy, y is an integer from 0 to 4, z is an integer from 0 to 4, and y-z > 0 or from a compound of formula

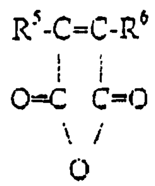

(III)

in which $R^5$ and $R^6$ are independently hydrogen or a $C_1$-$C_{20}$ alkyl, or $R^5$ and $R^6$ are joined with each other to form an alicyclic structure.

**12.** The process of Claim 11 in which the elastomeric polymer comprises a functionality detived from maleic anhydride.

**13.** The process of any one of Claims 1 to 12 in which the crosslinking agent is of the formula

$$R^2_pX'_q \qquad \text{(VII)}$$

in which each $R^2$ is independently a predominantly hydrocarbyl(ene) group, each X' is independently a reactive moiety selected from carboxylic acid, carboxylic anhydride, carboxylic salt, hydroxy, epoxy and isocyanate, p is an integer ≥ 1, and q is an integer ≥ 2.

**14.** The process of any one of Claims 1 to 13 wherein the crosslinking agent has two or more reactive substituents selected from epoxy and isocyanate.

**15.** The process of any one of Claims 1 to 11 wherein the crosslinking agent contains two or more epoxy substituents.

**16.** The process of any one of Claims 1 to 15, wherein the elastomeric polymer has a crystallinity less than 15 percent.

**17.** The process of any one of Claims 1 to 11 and 13 wherein the elastomeric polymer contains two or more epoxy substituents as reactive substituents.

**18.** The process of Claim 15 wherein the elastomeric polymer is an ethylene/1-octene copolymer containing maleic anhydride substituents and each X of formula (VII) is an epoxy moiety.

**19.** The process of any one of Claims 1 and 4 to 18 wherein the process is static vulcantization.

**20.** The process of Claim 2 or 3 in which the thermoplastic polymer (i) is at least 25% crystalline, (ii) has a number average molecular weight between of at least 7,000, and (iii) is selected from the group consisting of polyolefin, polyester, polyphenylene sulfide, polyphenylene oxide, and polyvinyl chloride.

**21.** The process of Claim 20 in which the thermoplastic polymer is selected from the group consisting of high density polyethylene, low density polyethylene, linear low density polyethylene, ultra low density polyethylene, polypropylene, ethylene-propylene copolymer, ethylene-styrene copolymer, polyisobutylene, ethylene-propylene-diene monomer terpolymer, polystyrene, acrylonitrile-butadiene-styrene terpolymer, ethylene/vinyl acetate, and polymers of ethylene and carbon monoxide.

**22.** The process of Claim 20 in which the thermoplastic polymer is polypropylene.

**23.** The process of Claim 2 or 3 in which the product of the process comprises a blend of (A) 60 to 25 wt. % thermoplastic polymer and (B) 40 to 75 wt. % at least partially crosslinked elastomer.

**24.** A melt-processible thermoplastic composition obtainable according to any one of Claims 2, 3 and 20 to 23.

**25.** A melt processible thermoplastic composition comprising a blend of

(A) 5 to 95 wt.% thermoplastic polymer and
(B) 95 to 5 wt.% of an at least partially crosslinked elastomer obtainable according to claim 1.

**26.** The composition of Claim 25 in which the thermoplastic polymer (i) is at least 25% crystalline, (ii) has a number average molecular weight of at least 7,000, and (iii) is selected from the group consisting of polyolefin, polyester, polyphenylene sulfide. polyphenylene oxide, and polyvinyl chloride.

**27.** The composition of Claim 26 in which the thermoplastic polymer is selected from the group consisting of high density polyethylene, low density polyethylene linear low density polyethylene, ultra low density polyethylene, polypropylene, ethylene-propylene copolymer, ethylene-styrene copolymer, polyisobunylene, ethylene-propylene-diene monomer terpolymer, polystyrene, acrylonitrile-butadiene-styrene terpolymer, ethylene/vinyl acetate, and polymers of ethylene and carbon monoxide.

**28.** The composition of Claim 26 in which the thermoplastic polymer is polypropylene.

**29.** The composition of any one of Claims 25 to 28 which comprises a blend of
(A) 60 to 25 wt. % thermoplastic polymer, and (B) 40 to 75 wt. % of the at least partially crosslinked elastomer.

**30.** An article comprising the composition of any one of Claims24 to 29,

**31.** An article made by thermoforming a composition obtainable by the process of any one of Claims 2.3 and 20 to 23.

**Patentansprüche**

**1.** Verfahren zum Herstellen eines zumindest teilweise quervernetzten Elastomers, dadurch gekennzeichnet, dass das Verfahren das Umsetzen durch Inkontaktbringen

(1) eines elastomeren Polymers, umfassend ein Ethylen/$_{\alpha}$-Olefin-Interpolymer, das reaktive Substituenten enthält, mit
(2) einem Quervernetzungsmittel, das

(a) zwei oder mehrere reaktive Substituenten umfasst, die von denjenigen, die im elastomeren Polymer enthalten sind, verschieden sind, und
(b) ein Molekulargewicht im Zahlenmittel von weniger als 2000 aufweist,

umfasst,
wobei jeder der reaktiven Substituenten derart ausgewählt ist, dass:

(i) diejenigen des elastomeren Polymers mit denjenigen des Quervernetzungsmittels reagieren werden, um das funktionalisierte elastomere Polymer zumindest teilweise querzuvernetzen und
(ii) jeder der reaktiven Substituenten ausgewählt ist aus Carbonsäure, Carbonsäureanhydrid, Carbonsäuresalz, Hydroxy, Epoxy und Isocyanat.

**2.** Verfahren zum Herstellen einer schmelzverarbeitbaren thermoplastischen Zusammensetzung, wobei das Verfahren den Schritt des dynamischen Vulkanisierens:

(A) eines elastomeren Polymers, umfassend ein Ethylen/$_{\alpha}$ -Olefin-Interpolymer, das reaktive Substituenten enthält, mit
(B) einem Quervernetzungsmittel, das zwei oder mehrere reaktive Substituenten umfasst,
in der Gegenwart
(C) eines thermoplastischen Polymers, umfasst,

worin

(1) das elastomere Polymer zwei oder mehrere reaktive Substituenten enthält, die von denjenigen, die im Quervernetzungsmittel enthalten sind, verschieden sind, und
(2) das Quervernetzungsmittel ein Molekulargewicht im Zahlenmittel von weniger als 2000 aufweist, wobei

jeder der reaktiven Substituenten ausgewählt ist,

(i) dass diejenigen des elastomeren Polymers mit denjenigen des Quervernetzungsmittels reagieren werden, um das elastomere Polymer zumindest teilweise querzuvernetzen und
(ii) aus der Gruppe, bestehend aus Carbonsäure, Carbonsäureanhydrid, Carbonsäuresalz, Carbonylhalogenid, Hydroxy, Epoxy und Isocyanat.

**3.** Verfahren zum Herstellen einer schmelzverarbeitbaren thermoplastischen Zusammensetzung, wobei das Verfahren den Schritt des Mischens

(A) eines zumindest teilweise quervernetzten Elastomers mit
(B) einem thermoplastischen Polymer

umfasst, worin das zumindest teilweise quervernetzte Elastomer gemäß Anspruch 1 hergestellt wird.

**4.** Verfahren nach einem der Ansprüche 1 bis 3, worin die $_{\alpha}$-Olefineinheiten des elastomeren Polymers von 4 bis 10 Kohlenstoffatome aufweisen wenn das elastomere Polymer ein Ehylen/$_{\alpha}$-Olefin/Dien-Terpolymer mit reaktiven Substituenten ist.

**5.** Verfahren nach einem der Ansprüche 1 bis 3, worin das elastomere Polymer ein Ethylen/$_{\alpha}$-Olefin-Interpolymer mit einer Dichte von weniger als 0,9 g/cm$^3$ ist.

**6.** Verfahren nach einem der Ansprüche 1 bis 5, worin das elastomere Polymer ein Ethylen/ $_{\alpha}$-Olefin-Copolymer mit reaktiven Substituenten ist.

**7.** Verfahren nach Anspruch 6, worin das $_{\alpha}$ -Olefin Propylen ist.

**8.** Verfahren nach einem der Ansprüche 1 bis 6, worin die $_{\alpha}$-Olefineinheiten des elastomeren Polymers von 4 bis 10 Kohlenstoffatome aufweisen.

**9.** Verfahren nach Anspruch 8, worin das elastomere Polymer eine Langkettenverzweigung enthält.

**10.** Verfahren nach Anspruch 8 oder 9, worin das $_{\alpha}$-Olefin 1-Octen ist.

**11.** Verfahren nach einem der Ansprüche 1 bis 10, worin das elastomere Polymer eine Funktionalität umfasst, die von einer Verbindung der Formel

$$R^3\text{-}(R^4X)_y\text{-}CH = CH\text{-}(R^4X)_z\text{-}R^3 \qquad \text{(III)}$$

worin $R^3$ H oder eine überwiegend Hydrocarbyl-Gruppe bedeutet, $R^4$ eine überwiegend Hydrocarbylengruppe bedeutet, jedes X gleich oder verschieden sein kann und einen reaktiven Rest bedeutet, ausgewählt aus Carbonsäure, Carbonsäureanhydrid, Carbonsäuresalz, Hydroxy und Epoxy, y eine ganze Zahl von 0 bis 4 ist, z eine ganze Zahl von 0 bis 4 ist und y-z > 0 oder einer Verbindung der Formel

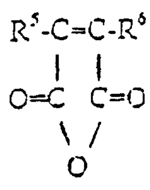

(III)

worin $R^5$ und $R^6$ unabhängig Wasserstoff oder ein $C_1$-$C_{20}$-Alkyl sind oder $R^5$ und $R^6$ miteinander verbunden sind, um eine alicyclische Struktur zu bilden, stammt.

**12.** Verfahren nach Anspruch 11, worin das elastomere Polymer eine Funktionalität umfasst, die von Maleinanhydrid

stammt.

**13.** Verfahren nach einem der Ansprüche 1 bis 12, worin das Quervernetzungsmittel die Formel

$$R^2_pX'_q \qquad \text{(VII)}$$

aufweist, worin jedes $R^2$ unabhängig eine überwiegend Hydrocarbyl(en)-Gruppe ist, jedes X' unabhängig ein reaktiver Rest ist, ausgewählt aus Carbonsäure, Carbonsäureanhydrid, Carbonsäuresalz, Hydroxy, Epoxy und Isocyanat, p eine ganze Zahl 1 ist und q eine ganze Zahl 2 ist.

**14.** Verfahren nach einem der Ansprüche 1 bis 13, worin das Quervernetzungsmittel zwei oder mehrere reaktive Substituenten, ausgewählt aus Epoxy und Isocyanat aufweist.

**15.** Verfahren nach einem der Ansprüche 1 bis 11, worin das Quervernetzungsmittel zwei oder mehrere Epoxysubstituenten enthält.

**16.** Verfahren nach einem der Ansprüche 1 bis 15, worin das elastomere Polymer eine Kristallinität von weniger als 15 Prozent aufweist.

**17.** Verfahren nach einem der Ansprüche 1 bis 11 und 13, worin das elastomere Polymer zwei oder mehrere Epoxysubstituenten als reaktive Substituenten enthält.

**18.** Verfahren nach Anspruch 15, worin das elastomere Polymer ein Ethylen/1-Octen-Copolymer ist, das Maleinanhydridsubstituenten enthält und jedes X der Formel (VII) ein Epoxyrest ist.

**19.** Verfahren nach einem der Ansprüche 1 und 4 bis 18, worin das Verfahren eine statische Vulkanisation ist.

**20.** Verfahren nach Anspruch 2 oder 3, worin das thermoplastische Polymer (i) mindestens 25 % kristallin ist, (ii) ein Molekulargewicht im Zahlenmittel von mindestens 7000 hat und (iii) ausgewählt wird aus der Gruppe, bestehend aus Polyolefin, Polyester, Polyphenylensulfid, Polyphenylenoxid und Polyvinylchlorid.

**21.** Verfahren nach Anspruch 20, worin das thermoplastische Polymer ausgewählt wird aus der Gruppe, bestehend aus Polyethylen mit hoher Dichte, Polyethylen mit geringer Dichte, linearem Polyethylen mit geringer Dichte, Polyethylen mit ultrageringer Dichte, Polypropylen, Ethylen-Propylen-Copolymer, Ethylen-Stryol-Copolymer, Polyisobutylen, Ethylen-Propylen-Dienmonomer-Terpolymer, Polystyrol, Acrylnitril-Butadien-Styrol-Terpolymer, Ethylen/Vinylacetat und Polymere von Ethylen und Kohlenmonoxid.

**22.** Verfahren nach Anspruch 20, worin das thermoplastische Polymer Polypropylen ist.

**23.** Verfahren nach Anspruch 2 oder 3, worin das Produkt des Verfahrens ein Gemisch aus (A) 60 bis 25 Gew.-% thermoplastischem Polymer und (B) 40 bis 75 Gew.-% eines zumindest teilweise quervernetzten Elastomers umfasst.

**24.** Schmelzverarbeitbare thermoplastische Zusammensetzung, erhältlich nach einem der Ansprüche 2, 3 und 20 bis 23.

**25.** Schmelzverarbeitbare thermoplastische Zusammensetzung, umfassend ein Gemisch aus

(A) 5 bis 95 Gew.-% thermoplastischem Polymer und
(B) 95 bis 5 Gew.-% eines zumindest teilweise vernetzten Elastomers, erhältlich nach Anspruch 1.

**26.** Zusammensetzung nach Anspruch 25, worin das thermoplastische Polymer (i) mindestens 25 % kristallin ist, (ii) ein Molekulargewicht im Zahlenmittel von mindestens 7000 aufweist und (iii) ausgewählt ist aus der Gruppe, bestehend aus Polyolefin, Polyester, Polyphenylensulfid, Polyphenylenoxid und Polyvinylchlorid.

**27.** Zusammensetzung nach Anspruch 26, worin das thermoplastische Polymer ausgewählt ist aus der Gruppe, bestehend aus Polyethylen mit hoher Dichte, Polyethylen mit geringer Dichte, linearem Polyethylen mit geringer Dichte, Polyethylen mit ultrageringer Dichte, Polypropylen, Ethylen-Propylen-Copolymer, Ethylen-Stryol-Copolymer, Polyisobutylen, Ethylen-Propylen-Dienmonomer-Terpolymer, Polystyrol, Acrylnitril-Butadien-Styrol-Terpolymer, Ethylen/Vinylacetat und Polymeren von Ethylen und Kohlenmonoxid.

**28.** Zusammensetzung nach Anspruch 26, worin das thermoplastische Polymer Polypropylen ist.

**29.** Zusammensetzung nach einem der Ansprüche 25 bis 28, umfassend ein Gemisch aus (A) 60 bis 25 Gew.-% thermoplastischem Polymer und (B) 40 bis 75 Gew.-% eines zumindest teilweise quervernetzten Elastomers.

**30.** Gegenstand, umfassend die Zusammensetzung nach einem der Ansprüche 24 bis 29.

**31.** Gegenstand, hergestellt durch Thermoformen einer Zusammensetzung, die erhältlich ist durch das Verfahren nach einem der Ansprüche 2, 3 und 20 bis 23.

## Revendications

**1.** Procédé de fabrication d'un élastomère au moins partiellement réticulé, caractérisé en ce que le procédé comprend l'étape consistant à faire réagir, par mise en contact :

(1) un polymère élastomérique, comprenant un interpolymère éthylène/$\alpha$-oléfine contenant des substituants réactifs, avec
(2) un agent de réticulation

(a) contenant deux ou plusieurs substituants réactifs différents de ceux contenus dans le polymère élastomérique, et
(b) ayant une masse moléculaire moyenne en nombre inférieure à 2000,

chacun des substituants réactifs étant choisi de telle sorte que

(i) ceux du polymère élastomérique réagissent avec ceux de l'agent réticulant pour réticuler au moins partiellement le polymère élastomérique fonctionnalisé et
(ii) chacun des substituants réactifs est choisi entre un acide carboxylique, un anhydride carboxylique, un sel d'acide carboxylique, un groupe hydroxy, époxy et isocyanate.

**2.** Procédé de fabrication d'une composition thermoplastique traitable à l'état fondu, le procédé comprenant l'étape de vulcanisation dynamique :

(A) d'un polymère élastomérique, comprenant un interpolymère éthylène/$\alpha$-oléfine contenant des substituants réactifs, avec
(B) un agent réticulant contenant deux ou plusieurs substituants réactifs, en présence de :
(C) un polymère thermoplastique

dans lequel

(1) le polymère élastomérique contient deux ou plusieurs substituants réactifs différents de ceux contenus dans l'agent réticulant, et
(2) l'agent réticulant a une masse moléculaire moyenne en nombre inférieure à 2000,

chacun des substituants réactifs étant choisi :

(i) de sorte que ceux du polymère élastomérique réagissent avec ceux de l'agent réticulant pour réticuler au moins partiellement le polymère élastomérique et
(ii) dans le groupe constitué d'un acide carboxylique, d'un anhydride carboxylique, d'un sel d'acide carboxylique, d'un halogénure de carbonyle, d'un groupe hydroxy, époxy et isocyanate.

**3.** Procédé de fabrication d'une composition thermoplastique traitable à l'état fondu, le procédé comprenant l'étape

de mélange de :

(A) un élastomère au moins partiellement réticulé avec
(B) un polymère thermoplastique dans lequel l'élastomère au moins partiellement réticulé est obtenu selon la revendication 1.

**4.** Procédé selon l'une quelconque des revendications 1 à 3 dans lequel les motifs d'$\alpha$-oléfine du polymère élastomérique ont entre 4 et 10 atomes de carbone lorsque le polymère élastomérique est un terpolymère éthylène/$\alpha$-oléfine/diène ayant des substituants réactifs.

**5.** Procédé selon l'une quelconque des revendications 1 à 3 dans lequel le polymère élastomérique est un interpolymère éthylène/$\alpha$-oléfine avec une masse volumique inférieure à 0,9 g/cm$^3$.

**6.** Procédé selon l'une quelconque des revendications 1 à 5 dans lequel le polymère élastomérique est un copolymère éthylène/$\alpha$-oléfine ayant des substituants réactifs.

**7.** Procédé selon la revendication 6 dans lequel l'$\alpha$-oléfine est le propylène.

**8.** Procédé selon l'une quelconque des revendications 1 à 6 dans lequel les motifs d'$\alpha$-oléfine du polymère élastomérique ont entre 4 et 10 atomes de carbone.

**9.** Procédé selon la revendication 8 dans lequel le polymère élastomérique contient des ramifications à longue chaîne.

**10.** Procédé selon la revendication 8 ou 9 dans lequel l'$\alpha$-oléfine est le 1-octène.

**11.** Procédé selon l'une quelconque des revendications 1 à 10 dans lequel le polymère élastomérique comprend une fonctionnalité dérivée d'un composé de formule :

$$R^3\text{-}(R^4X)_y\text{-}CH{=}CH\text{-}(R^4X)_z\text{-}R^3 \qquad (II)$$

dans laquelle R$^3$ représente H ou un groupe majoritairement hydrocarbyle, R$^4$ représente un groupe majoritairement hydrocarbylène, chaque X peut être identique ou différent et représente un fragment réactif choisi entre un acide carboxylique, un anhydride carboxylique, un sel d'acide carboxylique, un groupe hydroxy ou époxy, y est un entier compris entre 0 et 4, z est un entier compris entre 0 et 4, et $y - z > 0$, ou d'un composé de formule :

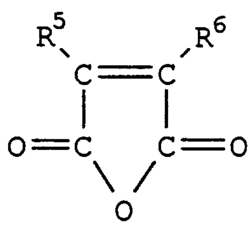

(III),

dans laquelle R$^5$ et R$^6$ représentent indépendamment un atome d'hydrogène ou un groupe alkyle en $C_1$-$C_{20}$, ou bien R$^5$ et R$^6$ sont liés l'un à l'autre pour former une structure alicyclique.

**12.** Procédé selon la revendication 11 dans lequel le polymère élastomérique comprend une fonctionnalité dérivée de l'anhydride maléique.

**13.** Procédé selon l'une quelconque des revendications 1 à 12 dans lequel l'agent réticulant a la formule :

$$R^2_pX'_q \qquad (VII)$$

dans laquelle $R^2$ représente indépendamment un groupe majoritairement hydrocarbyl(ène), chaque X représente indépendamment un fragment réactif choisi entre un acide carboxylique, un anhydride carboxylique, un sel d'acide carboxylique, un groupe hydroxy, époxy, ou isocyanate, p est un entier $\geq 1$, et q est un entier $\geq 2$.

**14.** Procédé selon l'une quelconque des revendications 1 à 13 dans lequel l'agent réticulant a deux ou plusieurs substituants réactifs choisis entre les groupes époxy et isocyanate.

**15.** Procédé selon l'une quelconque des revendications 1 à 11 dans lequel l'agent réticulant contient deux ou plusieurs substituants époxy.

**16.** Procédé selon l'une quelconque des revendications 1 à 15, dans lequel le polymère élastomérique a une cristallinité inférieure à 15 %.

**17.** Procédé selon l'une quelconque des revendications 1 à 11 et 13 dans lequel le polymère élastomérique contient deux ou plusieurs substituants époxy comme substituants réactifs.

**18.** Procédé selon la revendication 15 dans lequel le polymère élastomérique est un copolymère éthylène/1-octène contenant des substituants anhydride maléique et chaque X de la formule (VII) représente un fragment époxy.

**19.** Procédé selon l'une quelconque des revendications 1 et 4 à 18 dans lequel le procédé est la vulcanisation statique.

**20.** Procédé selon la revendication 2 ou 3 dans lequel le polymère thermoplastique (i) est cristallin à au moins 25 %, (ii) a une masse moléculaire moyenne en nombre d'au moins 7000, et (iii) est choisi dans le groupe constitué d'une polyoléfine, d'un polyester, d'un polysulfure de phénylène, d'un polyoxyde de phénylène, et d'un polychlorure de vinyle.

**21.** Procédé selon la revendication 20 dans lequel le polymère thermoplastique est choisi dans le groupe constitué du polyéthylène haute densité, du polyéthylène basse densité, du polyéthylène linéaire basse densité, du polyéthylène ultra basse densité, du polypropylène, du copolymère éthylène-propylène, du copolymère éthylène-styrène, du polyisobutylène, du terpolymère éthylène-propylène-diène, du polystyrène, du terpolymère acrylonitrile-butadiène-styrène, de l'éthylène/acétate de vinyle, et des polymères d'éthylène et de monoxyde de carbone.

**22.** Procédé selon la revendication 20 dans lequel le polymère thermoplastique est le polypropylène.

**23.** Procédé selon la revendication 2 ou 3 dans lequel le produit du procédé comprend un mélange de (A) 60 à 25 % en poids de polymère thermoplastique et (B) 40 à 75 % en poids d'un élastomère au moins partiellement réticulé.

**24.** Composition thermoplastique traitable à l'état fondu pouvant être obtenue selon l'une quelconque des revendications 2, 3 et 20 à 23.

**25.** Composition thermoplastique traitable à l'état fondu comprenant un mélange de

(A) 5 à 95 % en poids de polymère thermoplastique et
(B) 95 à 5 % en poids d'un élastomère au moins partiellement réticulé pouvant être obtenu selon la revendication 1.

**26.** Composition selon la revendication 25 dans laquelle le polymère thermoplastique (i) est cristallin à au moins 25 %, (ii) a une masse moléculaire moyenne en nombre d'au moins 7000, et (iii) est choisi dans, le groupe constitué d'une polyoléfine, d'un polyester, d'un polysulfure de phénylène, d'un polyoxyde de phénylène, et d'un polychlorure de vinyle.

**27.** Composition selon la revendication 26 dans laquelle le polymère thermoplastique est choisi dans le groupe constitué du polyéthylène haute densité, du polyéthylène basse densité, du polyéthylène linéaire basse densité, du polyéthylène ultra basse densité, du polypropylène, du copolymère éthylène-propylène, du copolymère éthylène-styrène, du polyisobutylène, du terpolymère éthylène-propylène-diène, du polystyrène, du terpolymère acrylonitrile-butadiène-styrène, de l'éthylène/acétate de vinyle, et des polymères d'éthylène et de monoxyde de carbone.

**28.** Composition selon la revendication 26 dans laquelle le polymère thermoplastique est le polypropylène.

**29.** Composition selon l'une quelconque des revendications 25 à 28 qui comprend un mélange de (A) 60 à 25 % en poids de polymère thermoplastique et (B) 40 à 75 % en poids d'un élastomère au moins partiellement réticulé.

**30.** Article comprenant la composition selon l'une quelconque des revendications 24 à 29.

**31.** Article fabriqué par thermoformage d'une composition pouvant être obtenue par le procédé selon l'une quelconque des revendications 2, 3 et 20 à 23.

FIG. 1

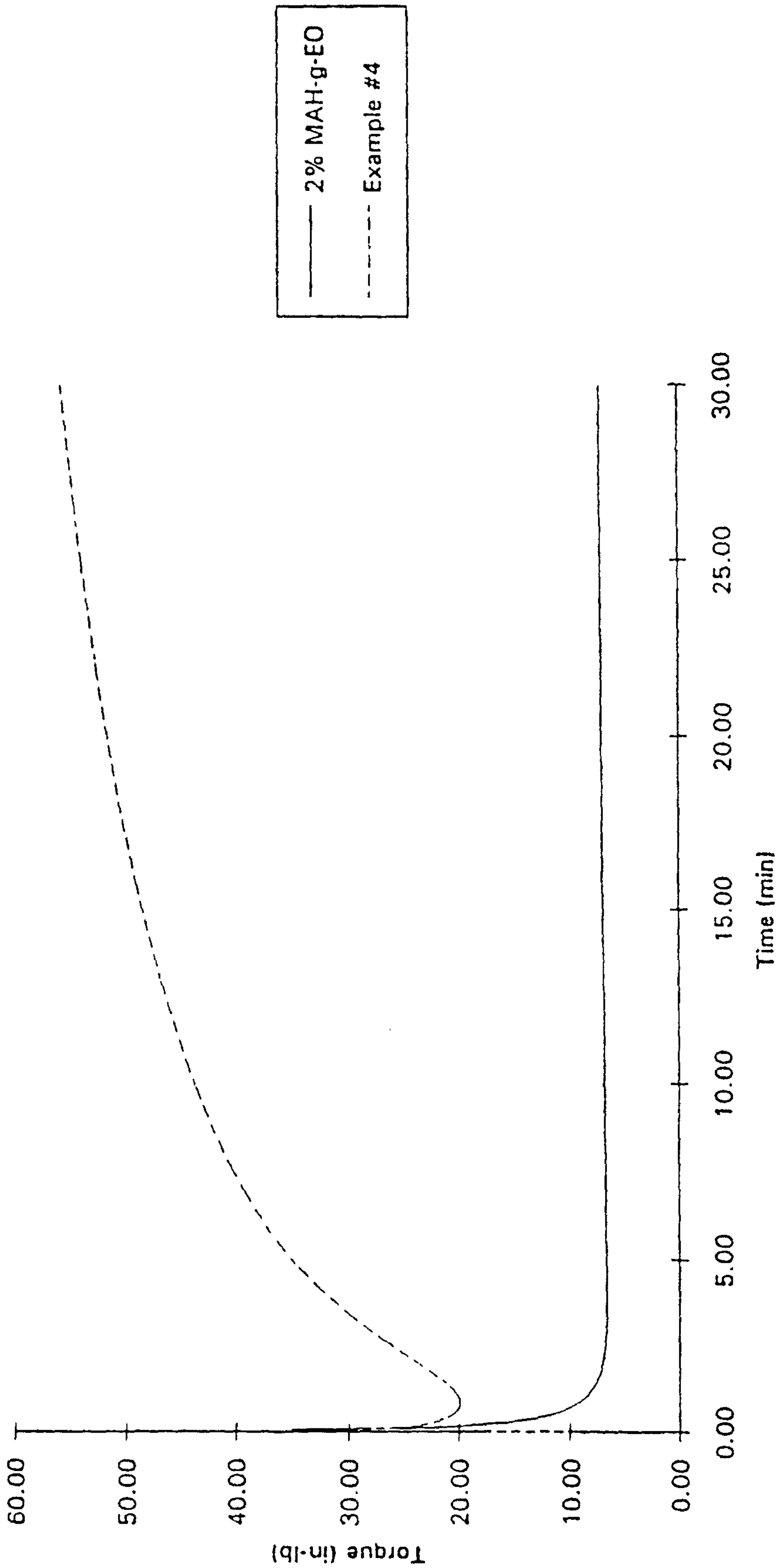
2% MAH-g-EO
Example #4
Torque (in-lb)
60.00
50.00
40.00
30.00
20.00
10.00
0.00
Time (min)
0.00
5.00
10.00
15.00
20.00
25.00
30.00